# FASCICULE DE BREVET EUROPEEN

(11) **EP 1 996 826 B1**
(45) Date de publication et mention de la délivrance du brevet: **02.05.2012**
(21) Numéro de dépôt: 07731113.2
(22) Date de dépôt: 08.03.2007
(51) Int. Cl.: F16D 41/20

(54) **ANTIDEVIREUR A RESSORT**
LOSDREHSICHERUNGSVORRICHTUNG MIT FEDER
SPRUNG ANTI-BACKING-OFF DEVICE

(30) Priorité: 08.03.2006 FR 0602066
(43) Date de publication de la demande: 03.12.2008
(73) Titulaire: Bernard Controls, 95500 Gonesse (FR)
(72) Inventeur: BRAUNLICH, Thomas, F-95505 Gonesse (FR); LEROY, Hervé, F-95505 Gonesse (FR); BERNARD, Etienne, F-95505 Gonesse (FR)
(74) Mandataire: L'Helgoualch, Jean
(86) Numéro de dépôt international: PCT/FR2007/000416
(87) Numéro de publication internationale: WO 2007/101947

(56) Documents cités:
- EP-A1- 0 368 526
- EP-A1- 0 717 166
- DE-A1- 3 211 506
- DE-A1- 10 110 034
- GB-A- 2 211 565

## Description

La présente invention concerne un dispositif mécanique anti-dévireur, et plus particulièrement un dispositif mécanique anti-dévireur à ressort adapté à un mécanisme permettant de passer d'une position extrême à une autre, tel qu'une vanne, une ventelle ou un robinet à commandes manuelle et motorisée, assurant une meilleure sécurité de la commande de vanne.

Des dispositifs mécaniques antiretour, limiteurs de couple et antidévireurs sont utilisés dans divers domaines techniques en particulier pour assurer une fonction de sécurité en empêchant ou limitant la rotation d'un arbre, par exemple pour empêcher la rotation du volant de commande manuelle d'une vanne comportant à la fois une commande manuelle et un servomoteur, ou dans des commandes de manoeuvre de portes ou encore dans des dispositifs lève-vitre pour assurer une sécurité contre le coincement accidentel. En particulier, dans l'industrie pétrolière ou dans le traitement des eaux, des vapeurs et des gaz, on utilise des vannes, robinets et ventelles pour fermer ou ouvrir des canalisations, qui peuvent être actionnés par des commandes manuelles ou motorisées fonctionnant dans des environnements qui peuvent être ouverts ou confinés. En général, la vanne est commandée par un servomoteur, et une commande manuelle par l'intermédiaire d'un volant et d'un réducteur permet le fonctionnement en cas de coupure de l'alimentation électrique du servomoteur ou de contrôle défectueux, afin de pouvoir ajuster le positionnement de la vanne entre les positions extrêmes d'ouverture et de fermeture.

La présence d'une commande manuelle et d'une commande motorisée sur la même vanne implique la nécessité de prévoir un dispositif de sécurité afin d'éviter que, par exemple, l'actionnement accidentel du volant de la commande manuelle n'interfère avec le fonctionnement de la commande motorisée. Il faut aussi prévoir que la commande manuelle puisse être utilisée normalement en toute sécurité lorsque cela est nécessaire.

A cet effet, on connaît des dispositifs de débrayage de l'entraînement manuel de l'arbre de la vanne, ou des dispositifs mécaniques limiteurs de couples, antiretours, ou antidévireurs, notamment des dispositifs à cliquets ou à galets. Par exemple, le brevet FR 2.816.016 décrit un dispositif limiteur de couple à ressort pour volets roulants sensible au sens de rotation. Les dispositifs connus sont souvent relativement complexes, comportent un nombre important de pièces mécaniques, dont le montage nécessite généralement une bonne précision, ce qui peut compliquer leur entretien et nuire à leur fiabilité.

Le document DE 101 10034 décrit un dispositif mécanique antidévireur à ressort capable d'assurer la solidarisation ou la désolidarisation d'un volante de commande manuelle et d'un moteur agissant sur un même axe de rotation.

Il est donc souhaitable de pouvoir disposer d'un dispositif fiable assurant une bonne sécurité de fonctionnement.

La présente invention a précisément pour objet un système motorisé à commande manuelle comprenant un dispositif mécanique antidévireur, peu coûteux, dont le montage est aisé, et procurant une bonne fiabilité de fonctionnement, notamment sur des vannes comportant une commande motorisée et une commande manuelle.

L'invention a encore pour objet un tel système comprenant un antidévireur à ressort assurant le débrayage de la commande manuelle d'une vanne motorisée.

La présente invention a encore pour objet un tel système comprenant un antidévireur à ressort permettant la transmission d'un couple identique quel que soit le sens de rotation de la commande manuelle.

L'invention a également pour objet un système motorisé à commande manuelle qui comprend un dispositif mécanique antidévireur, et en particulier un tel système dans lequel l'axe de rotation du dispositif antidévireur agit sur le mouvement d'ouverture et de fermeture d'une vanne.

L'antidévireur à ressort de la présente invention est capable d'assurer la solidarisation ou la désolidarisation d'un volant de commande manuelle et d'un moteur agissant sur un même axe de rotation. Il comprend un ressort cylindrique, de préférence un ressort cylindrique à spires jointives, monté dans ou sur un cylindre, ledit cylindre étant monté rotatif sur l'axe de rotation dudit moteur, et ledit ressort pouvant tourner avec ledit cylindre, les spires du ressort étant en contact avec la surface interne ou externe du cylindre et ses extrémités étant susceptibles d'entrer en contact avec ledit volant, et il se distingue en ce que les extrémités du ressort cylindrique sont recourbées vers l'intérieur ou vers l'extérieur, ledit volant, par exemple un volant de commande manuelle de vanne, étant susceptible d'agir sur la courbe de l'une ou l'autre des extrémités du ressort par l'intermédiaire d'un doigt de manoeuvre ou d'un cylindre entraîneur, et la rotation du ressort étant limitée par une butée agissant contre l'une ou l'autre des extrémités du ressort.

Dans un tel dispositif, le ressort transmet le mouvement entre le moteur et le volant, comme cela ressortira de la description des figures ci-après.

Conformément à une forme préférentielle de réalisation, les deux extrémités du ressort sont recourbées vers l'intérieur, et situées sensiblement symétriquement de part et d'autre d'un plan diamétral du ressort. De préférence, elles sont disposées l'une par rapport à l'autre de telle sorte que les plans diamétraux tangents à la courbe de chacune des deux extrémités du ressort forment entre eux un angle compris entre 90° et 180°, dans lequel vient se positionner le doigt de manoeuvre, qui pénètre à l'intérieur du ressort cylindrique, sur toute sa hauteur, afin de pouvoir agir sur l'une ou l'autre de ses extrémités, tandis qu'une plaque de débrayage serrée sur le palier du volant de commande manuelle, est placée sensiblement symétriquement par rapport à l'axe.

Suivant une variante, les deux extrémités du ressort cylindrique sont recourbées vers l'extérieur et le ressort est monté sur un support cylindrique situé dans un cylindre présentant deux butées coopérant avec l'extérieur de la courbe de chacune des extrémités recourbées du ressort, de telle sorte qu'un mouvement de rotation relatif du ressort par rapport au support cylindrique engendre sur l'une ou l'autre des extrémités du ressort un couple opposé à l'enroulement des spires et tendant à provoquer une augmentation de son diamètre.

Dans les deux variantes, les extrémités du ressort cylindrique sont recourbées de manière à former une boucle fermée, l'arête de l'extrémité venant en contact avec la spire, afin de limiter le risque de déformation ou de rupture en cours de fonctionnement.

Le ressort cylindrique utilisé dans la présente invention est de préférence un ressort à spires jointives, à section ronde ou carrée, et de préférence carrée, réalisé en une matière présentant une raideur appropriée, par exemple en acier, plus particulièrement en acier C60.

Il est préférable que le diamètre du ressort à vide soit supérieur de 2% environ au diamètre intérieur du cylindre dans lequel il est logé, ou inférieur de 2% au diamètre extérieur du cylindre sur lequel il est monté, selon les variantes de l'antidévireur de l'invention, de manière à assurer un bon contact entre les spires du ressort et la surface correspondante du cylindre. Pour la même raison, il est nécessaire que la longueur des spires soit suffisante, et par exemple, selon les applications envisagées, elle peut être comprise entre 100 mm et 1.000 mm, et être par exemple de l'ordre de 500 mm dans le cas d'un dévireur pour vanne.

L'agencement du dispositif permet de supporter des vitesses de rotation élevées, comprises entre environ 75 et environ 150 tours/minute, et des différences importantes de vitesse de rotation entre le volant de commande manuelle et l'axe de rotation du moteur, ce qui constitue un avantage supplémentaire de la présente invention.

Le dispositif mécanique anti-dévireur de l'invention peut être utilisé dans tout mécanisme comportant un arbre tournant à commande manuelle ou motorisée susceptible de passer d'une position d'ouverture à une position de fermeture et inversement, et par exemple une commande de vanne, une commande de porte ou encore un lève-vitre de portière de véhicule automobile. Il s'applique tout particulièrement aux commandes de vannes, par exemple des vannes quart de tour ou des vannes multitours utilisées dans des installations comportant des canalisations de fluides tels que pétrole, eau, vapeurs ou gaz divers.

Le dispositif mécanique antidévireur de l'invention peut être inséré dans un mécanisme comprenant un arbre de commande de vanne, entraîné en rotation manuellement et par un servomoteur, la tige de la vanne étant liée cinématiquement par un réducteur et/ou un ensemble roue/vis sans fin.

Ainsi, dans le cas d'une commande de vanne, il est avantageux de prévoir que la commande manuelle peut agir sur l'une ou l'autre des extrémités recourbées du ressort cylindrique, en exerçant un couple contre le sens d'enroulement des spires, de manière à provoquer un élargissement du ressort lorsque ce dernier est dans le cylindre lié à la tige de vanne, ou au contraire dans le sens d'enroulement des spires lorsque le ressort est sur le cylindre. Dans les deux cas l'actionnement de la commande manuelle a pour effet de solidariser le ressort cylindrique avec le cylindre lié cinématiquement à la tige de vanne. Inversement, une rotation du moteur a pour effet de désolidariser le ressort cylindrique du cylindre, quel que soit le sens de rotation, et donc de débrayer le volant de commande manuelle.

L'antidévireur à ressort de la présente invention présente l'avantage, notamment dans son application aux vannes à commande motorisée et commande manuelle, d'assurer efficacement le débrayage de la commande manuelle sans les risques de coincement inhérents aux systèmes à galets classiques. De plus, le nombre de pièces constitutives de l'antidévireur de l'invention est limité à trois ou quatre tandis que les systèmes classiques en utilisent quinze à vingt. Le temps de montage se trouve alors considérablement diminué.

L'antidévireur de l'invention présente aussi l'avantage de pouvoir transmettre un couple identique à la vis sans fin liée à la tige de vanne, quel que soit le sens de rotation du volant de commande manuelle de la vanne, et aussi de permettre la rotation de la vis sans fin sous l'action d'un moteur d'entraînement, sans faire tourner le volant de commande manuelle, ce qui permet de garantir la sécurité de l'opérateur.

Les caractéristiques et avantages de la présente invention apparaîtront plus en détail dans la description qui suit relative à deux exemples préférentiels de réalisation, en référence aux dessins annexés, qui représentent :
Figure 1 : une vue éclatée en perspective d'un anti-dévireur conforme à l'invention monté entre un moteur et un volant manuel de commande de vanne.
Figure 2 : une coupe axiale de l'antidévireur de la figure 1.
Figure 3 : une vue éclatée en perspective d'une variante de l'antidévireur de l'invention.

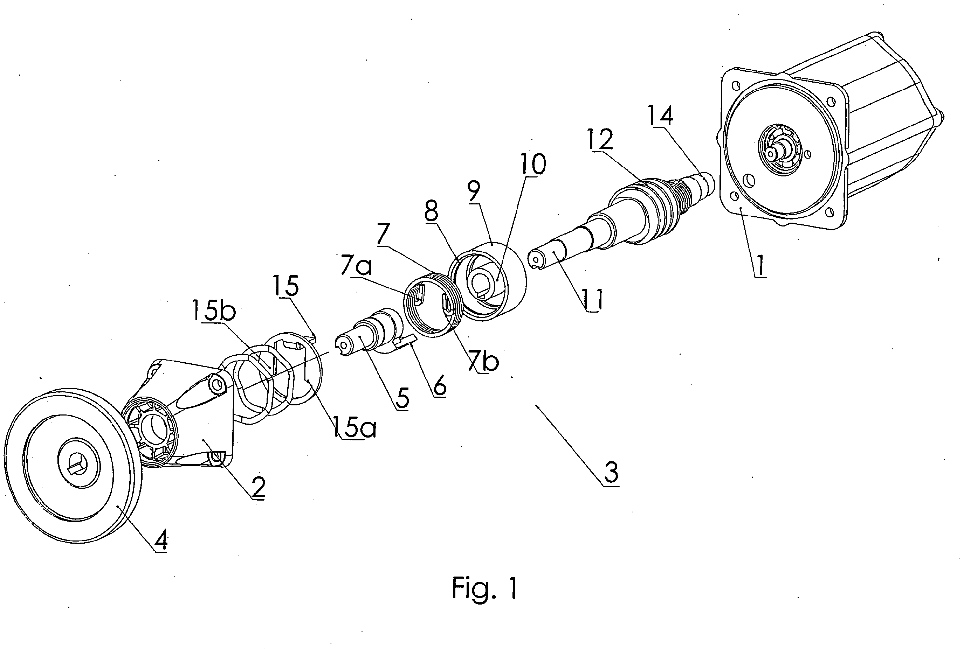

Le dispositif antidévireur suivant l'invention représenté sur la Figure 1 est inclus dans un ensemble comprenant un carter (1) renfermant un servomoteur et un réducteur (non représentés) entraînant une tige de manoeuvre de vanne par l'intermédiaire d'une roue engrenant une vis sans fin solidaire de la tige de vanne suivant une technique connue.

Un capot (2) portant un palier vient se fixer sur le carter (1), éventuellement par l'intermédiaire d'un cylindre (non représenté), afin de protéger le dispositif antidévireur (3) de l'environnement. Le volant (4) de commande manuelle est monté sur l'extrémité (5) de l'axe de la pièce mobile portant le doigt (6). Le palier du capot (2) assure le maintien de l'axe sur lequel le volant est fixé de manière classique, par exemple au moyen d'une clavette coopérant avec une gorge formée dans l'axe.

La pièce mobile portant le doigt de manoeuvre (6) peut pivoter à l'intérieur du ressort cylindrique (7) à spires jointives dont les deux extrémités (7a) et (7b) sont recourbées vers l'intérieur. Ce ressort cylindrique (7) est placé à l'intérieur de la couronne (8) de la cloche cylindrique (9). Le diamètre intérieur de la couronne (8) est légèrement inférieur au diamètre extérieur du ressort (7) à l'état libre, de telle sorte que les spires jointives du ressort soient plaquées contre la paroi interne de la couronne (8). Le ressort (7) est précontraint pour être placé dans la couronne (8) et exerce donc une charge uniformément répartie sur la paroi interne de la couronne.

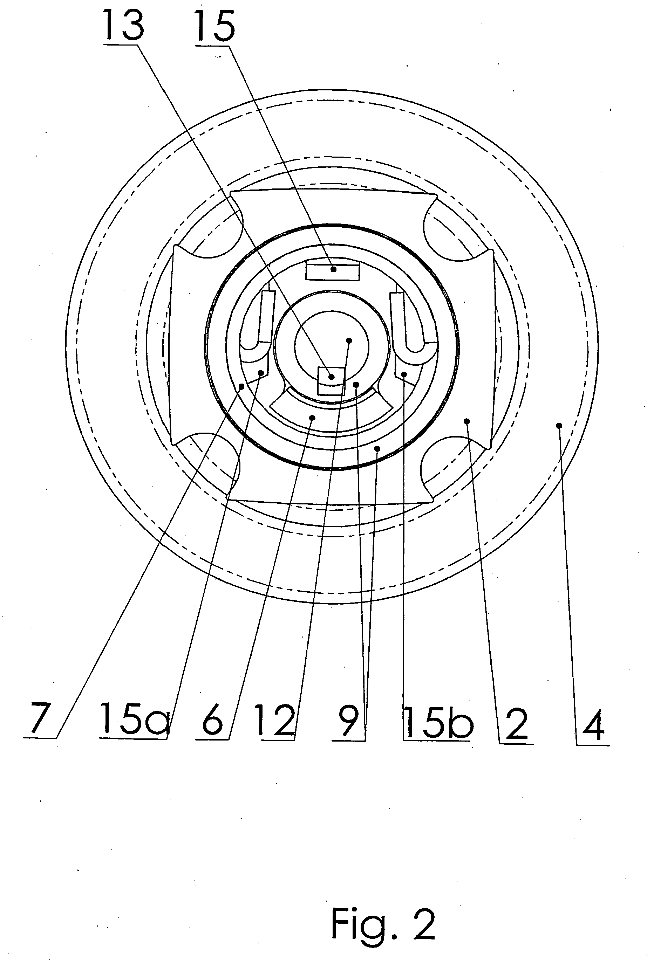

La cloche (9) comporte un manchon cylindrique (10) central assurant sa fixation sur l'arbre (11) portant la vis sans fin (12) par l'intermédiaire d'une clavette (13), représentée sur la Fig. 2, coopérant avec une gorge formée sur la tête de l'arbre (11).

Le ressort (7) est choisi de telle sorte que le couple de glissement entre ses spires et la paroi interne de la couronne (8), qui est fonction du diamètre du ressort libre, de sa raideur et de sa section, soit supérieur au couple à transmettre par le volant (4), dans les conditions normales de fonctionnement, de telle sorte que la rotation du doigt de manoeuvre (6) entraîne la rotation de la cloche (9) par l'intermédiaire du ressort spirale (7) bloqué contre la paroi interne de la couronne (8) et solidarisée à celle-ci.

Ainsi, lorsque la commande de vanne est manoeuvrée manuellement, en agissant sur le volant (4), le doigt (6) pivote jusqu'à venir en contact contre la courbe extérieure de l'une ou l'autre des extrémités (7a) et (7b) du ressort (7). Le couple résultant de l'action exercée sur le volant (4) tend à provoquer un déroulement du ressort (7) et par conséquent un élargissement de son diamètre, augmentant encore le couple de glissement entre le ressort et la couronne (8), ce qui a pour effet de renforcer la solidarisation du ressort et de la couronne. Ainsi la rotation du volant entraîne la rotation du ressort et de la cloche, qui entraîne à son tour la vis sans fin agissant sur la tige de la vanne.

Lorsque la commande de vanne est actionnée par le servomoteur, ce dernier entraîne la vis sans fin (12) par son axe (14), ainsi que la cloche (9) et le ressort (7) par l'intermédiaire de la couronne (8) en raison du couple de glissement entre le ressort et la couronne. Le ressort tourne sur son axe jusqu'à ce que la pointe d'une de ses extrémités (7a) et (7b), suivant le sens de rotation, vienne en butée contre la plaque de débrayage (15) qui est serré sur le palier du capot (2) par l'intermédiaire d'un ou plusieurs joints de type classique. Ces joints ou rondelles permettent de générer un couple de glissement C₁ entre le palier (2) et la plaque de débrayage (15).

Lorsque le mouvement de rotation continue, le couple exercé sur la pointe repliée de l'extrémité du ressort (7) tend à enrouler ce dernier sur lui-même, et par conséquent à réduire son diamètre, jusqu'à désolidariser le ressort (7) de la couronne (8). La couronne et la vis sans fin (12) continuent alors de tourner sous l'action du moteur tandis que le ressort reste immobile.

Le doigt de manoeuvre (6) n'est donc pas entraîné par le ressort (7) et reste immobile, de même que le volant (4) dont il est solidaire.

Le couple de glissement C₁ entre la plaque de débrayage (15) et le palier (2) est réglé de telle sorte qu'il soit toujours supérieur au couple de glissement C₂ entre le ressort cylindrique (7) et la cloche (9). Il en résulte que la plaque de débrayage est solidaire du palier lorsque la vis sans fin est entraînée par le moteur.

Inversement, en commande manuelle, le doigt de manoeuvre (6) agit sur les extrémités recourbées (7a) et (7b) du ressort et peuvent entraîner celui-ci en rotation dès que le couple C₁ est atteint, évitant tout blocage du système.

En commande manuelle, la plaque de débrayage (15) peut être entraînée en rotation par le doigt de manoeuvre (6) par l'intermédiaire de ses faces d'appui (15a) et (15b) situées dans un plan extérieur au déplacement des extrémités du ressort de telle sorte que les extrémités du ressort ne puissent agir que sur la plaque de débrayage (15) précisément.

La Figure 2 représente une coupe de l'antidévireur de la Figure 1, les pièces étant montées, au niveau de la base de la cloche (9).

Dans la position représentée, l'antidévireur n'est pas actionné, le doigt de manoeuvre (6) se trouvant sensiblement à égale distance du pli arrondi de chacune des extrémités (7a) et (7b) du ressort cylindrique (7). La butée de la plaque de débrayage (15) se trouve sensiblement à égale distance des extrémités du ressort, dans une position opposée à celle du doigt de manoeuvre par rapport à l'axe.

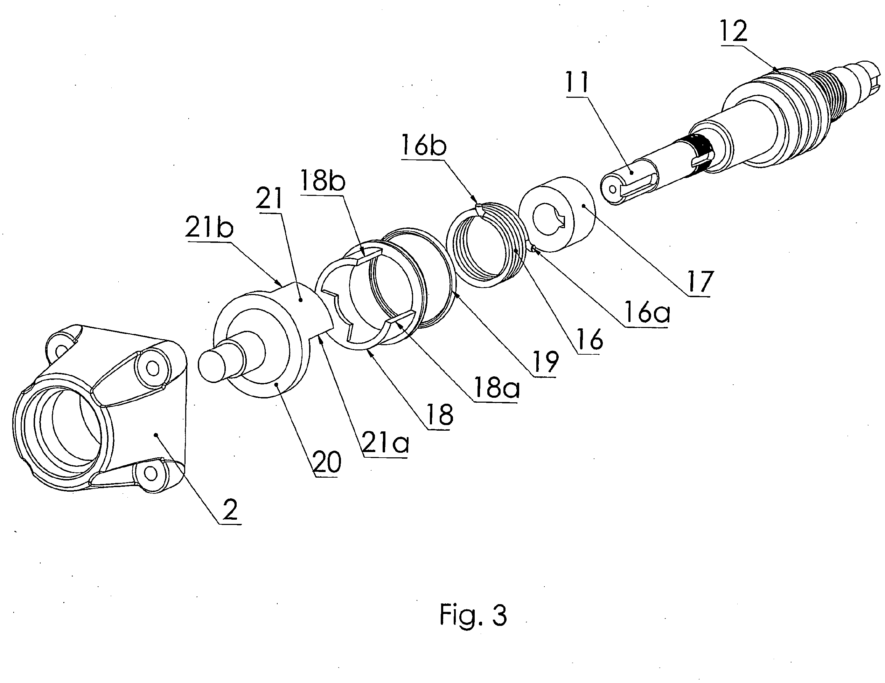

La Figure 3 représente une variante du dévireur à ressort de la Figure 1 où les extrémités du ressort sont recourbées vers l'extérieur, le mode de fonctionnement étant alors différent, mais appliquant le même principe.

Dans cette variante, le ressort cylindrique (16) à spires jointives comporte deux extrémités (16a) et (16b) recourbées vers l'extérieur. Il est monté sur un support cylindrique (17) de telle sorte que ses spires soient en contact avec la surface externe du cylindre (17) de manière à engendrer un couple de frottement quand l'une des pièces est en mouvement de rotation par rapport à l'autre.

Le support cylindrique (17) est monté sur l'arbre (11) portant la vis sans fin (12) par l'intermédiaire d'une clavette (13) coopérant avec deux gorges formées, l'une sur la tête de l'arbre (11), l'autre sur la face interne du support (17), comme sur le dispositif de la Figure 1. Il est donc entraîné en rotation par le servomoteur.

Le support cylindrique (17) et le ressort (16) sont placés dans un cylindre porte-joint (18), serré sur le carter du servomoteur (non représenté) par l'intermédiaire d'un joint torique (19), et présentant la forme d'un cylindre partiellement ouvert. Les extrémités (16a) et (16b) du ressort cylindrique (16) peuvent se déplacer légèrement en rotation avec le ressort, mais leur course est limitée par les bords (18a) et (18b) respectivement formés suivant deux génératrices du cylindre porte-joint (18).

L'autre pièce tournante de l'antidévireur est un cylindre entraîneur (20) solidaire du volant de commande manuelle de la vanne. Ce cylindre entraîneur comporte une lame (21) dont les bords (21a) et (21b) coopèrent avec les extrémités recourbées (16a) et (16b) respectivement, du ressort (16). Il est solidaire du volant de commande manuelle (non représenté) identique à celui de la Figure 1.

La largeur de la lame cylindrique (21) est légèrement inférieure à l'écartement entre les deux extrémités (16a) et (16b) du ressort (16) entre lesquelles il est mis en place, de telle sorte qu'un mouvement de rotation du cylindre entraîneur (20) amène l'un ou l'autre des bords de cette lame (21) en butée contre l'intérieur de la courbe des extrémités courbées (16a) et (16b) du ressort.

Lorsque le mécanisme est en fonctionnement motorisé, le moteur entraîne en rotation la vis sans fin (12) et le support cylindrique (17). Le ressort (16), entraîné par le support (17) vient alors en butée par l'une ou l'autre de ses extrémités (16a) et (16b) selon le sens de rotation, contre le bord (18a) ou (18b) respectivement, du porte joint fixe (18) ce qui génère un couple contre l'enroulement des spires du ressort et provoque le déroulement du ressort et une augmentation de son diamètre, de telle sorte que le ressort se désolidarise de son support. La vis sans fin (12) tourne alors librement sans entraîner le ressort, non plus que le volant de commande manuel.

Au contraire, lorsque le volant de commande manuelle est actionné, l'un ou l'autre des bords de la lame (21) du cylindre entraîneur (20), selon le sens de rotation, agit sur l'intérieur de la courbe de l'extrémité recourbée (16a) ou (16b), dans le sens de l'enroulement, accentuant ainsi la pression des spires sur le support cylindrique, ce qui permet d'entraîner la vis sans fin (12). Dans cette variante, le cylindre porte-joint (18) joue le même rôle que la plaque de débrayage (15) dans le dévireur de la Figure 1.

## Revendications

1. Système motorisé à commande manuelle, comprenant un dispositif mécanique antidévireur à ressort, capable d'assurer la solidarisation ou la désolidarisation d'un volant de commande manuelle (4) et d'un moteur agissant sur un même axe de rotation, comprenant un ressort cylindrique (7, 16) monté dans ou sur un cylindre (9, 17), ledit cylindre (9, 17) étant monté rotatif sur l'axe de rotation dudit moteur, et ledit ressort pouvant tourner avec ledit cylindre, les spires du ressort étant en contact avec la surface interne ou externe du cylindre, les extrémités (7a, 7b, 16a, 16b) du ressort (7, 16) sont recourbées vers l'intérieur ou vers l'extérieur, **caractérisé en ce que** ledit volant (4) étant susceptible d'agir sur la courbe de l'une ou l'autre des extrémités du ressort (7, 16) par l'intermédiaire d'un doigt de manoeuvre (6) d'une lame (21) ou d'un cylindre entraîneur (20), et la rotation du ressort (7, 16) étant limitée par une butée agissant contre l'une ou l'autre des extrémités (7a, 7b, 16a, 16b) du ressort.

2. Système motorisé selon la revendication 1, **caractérisé en ce que** le ressort (7, 16) est un ressort cylindrique à spires jointives.

3. Système motorisé selon la revendication 2, **caractérisé en ce que** le ressort (7, 16) comporte des spires à section sensiblement carrée.

4. Système motorisé selon l'une quelconque des revendications précédentes, **caractérisé en ce que** les deux extrémités du ressort (7) sont recourbées vers l'intérieur.

5. Système motorisé selon la revendication 4, **caractérisé en ce que** les extrémités recourbées (7a, 7b) du ressort (7) sont situées sensiblement symétriquement de part et d'autre d'un plan diamétral du ressort.

6. Système motorisé selon la revendication 5, **caractérisé en ce que** les plans diamétraux tangents à la courbe de chacune des deux extrémités du ressort (7) forment entre eux un angle compris entre 90° et 180° dans lequel est placé le doigt de manoeuvre (6), tandis qu'une plaque fixe de débrayage (15) est placée sensiblement symétriquement par rapport à l'axe.

7. Système motorisé selon l'une quelconque des revendications 1 à 6, **caractérisé en ce que** le doigt de manoeuvre (6) pénètre à l'intérieur du ressort (7), sur toute sa hauteur.

8. Système motorisé selon l'une quelconque des revendications 1 à 3, **caractérisé en ce que** les deux extrémités du ressort (16) sont recourbées vers l'extérieur.

9. Système motorisé selon la revendication 8, **caractérisé en ce que** le ressort (16) est monté sur un support cylindrique (17) situé dans un cylindre (18) présentant deux butées, chaque butée coopérant avec l'extérieur de la courbe de chacune des extrémités recourbées du ressort.

10. Système selon l'une quelconque des revendication 1 à 9, **caractérisé en ce que** l'axe de rotation dudit dispositif agit sur le mouvement d'ouverture et de fermeture d'une vanne.

## Claims

1. Manual control motorized system comprising a mechanical sprung anti-backoff device, capable of fixedly immobilizing or releasing a manual control handwheel (4) and a motor acting on the same rotation shaft, comprising a cylindrical spring (7, 16) mounted in or on a cylinder (9, 17), said cylinder (9, 17) being mounted so as to rotate on the rotation shaft of said motor, and said spring being able to rotate with said cylinder, the turns of the spring being in contact with the inner or outer surface of the cylinder, the ends (7a, 7b, 16a, 16b) of the spring (7, 16) are curved inward or outward, **characterized in that** said handwheel (4) is capable of acting on the curve of one or other of the ends of the spring (7, 16) by means of an operating finger (6), a strip (21) or of a drive cylinder (20), and the rotation of the spring (7, 16) is limited by a stop acting against one or other of the ends (7a, 7b, 16a, 16b) of the spring.

2. Motorized system according to Claim 1, **characterized in that** the spring (7, 16) is a cylindrical spring with touching turns.

3. Motorized system according to Claim 2, **characterized in that** the spring (7, 16) comprises substantially square-section turns.

4. Motorized system according to any one of the preceding claims, **characterized in that** the two ends of the spring (7) are curved inward.

5. Motorized system according to Claim 4, **characterized in that** the curved ends (7a, 7b) of the spring (7) are situated substantially symmetrically on either side of a diametral plane of the spring.

6. Motorized system according to Claim 5, **characterized in that** the diametral planes tangential to the curve of each of the two ends of the spring (7) form between them an angle lying between 90° and 180° in which the operating finger (6) is placed, while a fixed release plate (15) is placed substantially symmetrically relative to the shaft.

7. Motorized system according to any one of Claims 1 to 6, **characterized in that** the operating finger (6) enters the inside of the spring (7), over the whole of its height.

8. Motorized system according to any one of Claims 1 to 3, **characterized in that** the two ends of the spring (16) are curved outward.

9. Motorized system according to Claim 8, **characterized in that** the spring (16) is mounted on a cylindrical support (17) situated in a cylinder (18) having two stops, each stop interacting with the outside of the curve of each of the curved ends of the spring.

10. System according to any one of Claims 1 to 9, **characterized in that** the rotation shaft of said device acts on the opening and closing movement of a valve.

## Patentansprüche

1. Manuell gesteuertes motorisiertes System, das eine mechanische Feder-Rücklaufsperrvorrichtung umfasst, die imstande ist, die Verbindung oder die Trennung eines manuellen Steuerrads (4) und eines Motors, die auf derselben Rotationsachse wirken, zu gewährleisten, das eine zylindrische Feder (7, 16) umfasst, die in oder auf einem Zylinder (9, 17) montiert ist, wobei der Zylinder (9, 17) rotierend auf der Rotationsachse des Motors montiert ist, und wobei die Feder mit dem Zylinder drehbar ist, wobei die Windungen der Feder mit der inneren oder äußeren Fläche des Zylinders im Kontakt sind, wobei die Enden (7a, 7b, 16a, 16b) der Feder (7, 16) nach innen oder nach außen gekrümmt sind, **dadurch gekennzeichnet, dass** das Steuerrad (4) imstande ist, auf die Krümmung des einen oder des anderen der Enden der Feder (7, 16) über einen Manövrierfinger (6) eines Plättchens (21) oder einen Antriebszylinder (20) einzuwirken, und die Rotation der Feder (7, 16) durch einen Anschlag begrenzt ist, der gegen das eine oder das andere der Enden (7a, 7b, 16a, 16b) der Feder wirkt.

2. Motorisiertes System nach Anspruch 1, **dadurch gekennzeichnet, dass** die Feder (7, 16) eine zylindrische Feder mit nebeneinanderliegenden Windungen ist.

3. Motorisiertes System nach Anspruch 2, **dadurch gekennzeichnet, dass** die Feder (7, 16) Windungen mit etwa quadratischem Querschnitt aufweist.

4. Motorisiertes System nach einem der vorangehenden Ansprüche, **dadurch gekennzeichnet, dass** die zwei Enden der Feder (7) nach innen gekrümmt sind.

5. Motorisiertes System nach Anspruch 4, **dadurch gekennzeichnet, dass** die gekrümmten Enden (7a, 7b) der Feder (7) auf der einen und der anderen Seite einer diametralen Ebene der Feder etwa symmetrisch sind.

6. Motorisiertes System nach Anspruch 5, **dadurch gekennzeichnet, dass** die die Krümmung jedes der zwei Enden der Feder (7) berührenden diametralen Ebenen untereinander einen Winkel zwischen 90° und 180° inklusive bilden, in dem der Manövrierfinger (6) platziert ist, wogegen eine starre Auskupplungsplatte (15) etwa symmetrisch im Verhältnis zur Achse platziert ist.

7. Motorisiertes System nach einem der Ansprüche 1 bis 6, **dadurch gekennzeichnet, dass** der Manövrierfinger (6) über seine gesamte Höhe in die Feder (7) eindringt.

8. Motorisiertes System nach einem der Ansprüche 1 bis 3, **dadurch gekennzeichnet, dass** die zwei Enden der Feder (16) nach außen gekrümmt sind.

9. Motorisiertes System nach Anspruch 8, **dadurch gekennzeichnet, dass** die Feder (16) auf einer zylindrischen Unterlage (17) montiert ist, die sich in einem Zylinder (18) befindet, der zwei Anschläge aufweist, wobei jeder Anschlag mit der Außenseite der Krümmung jedes der gekrümmten Enden der Feder zusammenarbeitet.

10. Systeme nach einem der Ansprüche 1 bis 9, **dadurch gekennzeichnet, dass** die Rotationsachse der Vorrichtung auf die Öffnungs- und Verschlussbewegung eines Schiebers einwirkt.
